# EUROPEAN PATENT APPLICATION

(11) **EP 2 765 546 A1**
(43) Date of publication of application: **13.08.2014**
(21) Application number: 13154795.2
(22) Date of filing: 11.02.2013
(51) Int. Cl.: G06Q 10/08, G06Q 50/28

(54) **Method and apparatus for identifying an object**

(71) Applicant: 3M Innovative Properties Company, Saint Paul, MN 55133-3427 (US)
(72) Inventor: Kirchmeyer, Domenica, 41453 Neuss (DE); Bialluch, Robert, 41453 Neuss (DE)
(74) Representative: Gabriel, Kiroubagaranne

(57) **Abstract**

Methods and apparatus are disclosed for identifying an above-ground, ground-anchored object, the ground-anchored object being tagged with at least one below-ground electronic marker unit. The method involves providing a remote reader, using the remote reader to interrogate a below-ground volume, to obtain electronic marker data from the electronic marker units, and using the electronic marker data to determine the identity and/or location of the ground-anchored object. Ground anchored objects may include trees, road intersections, or road furniture such as benches, a traffic barriers or signs. The preferred electronic marker unit uses a radio frequency passive transponder. Also disclosed are methods for tagging a ground-anchored object involving burying an electronic marker unit in the ground at a predetermined depth and at a predetermined marker distance from the ground-anchored object.

## Description

The present invention relates to methods of identifying above ground, ground anchored objects, to apparatus for tagging and identifying above ground, ground anchored objects and to methods of tagging above ground, ground anchored objects.

Organisations responsible for road maintenance and security require the inventory of objects on the roads to be recorded. Such objects may include road signs, pavement marking, road furniture, trees, or other ground-anchored objects. Software based systems are known. These systems typically use video technology to record the road condition and ground-anchored objects. The objects can later be located or identified using GPS, the inventory database and signs or markers attached to the object. When inspection of the object or objects becomes necessary, workers check the sign or markers and refer to the database and GPS systems.

Other components and systems for use in recording objects are known.

WO-A-2007/141424 concerns a road system device comprising a road system component wherein is provided a receiver port, a transponder, and a link element.

US-A-2009/0128336 relates to a method and system for monitoring forest products.

In a first aspect of the present invention, there is provided a method of identifying an above-ground, ground-anchored object, the ground-anchored object being tagged with at least one below-ground electronic marker unit, the method comprising providing a remote reader, using the remote reader to interrogate a below-ground volume, thereby obtaining electronic marker data from one or more electronic marker units in the below-ground volume and, using the electronic marker data to determine the identity and/or location of the ground-anchored object.

This invention is advantageous because it addresses issues with known methods where identification of objects is required by close approach and, usually, direct visual examination of the sign or marker. This may be difficult especially since signs or markers fixed to the object (even in protective casings) may be susceptible to vandalism or weathering over the years in which the identification method is intended to operate. In the case of trees, growth of the tree (e.g. of the bark) may also damage the sign or marker.

This invention addresses this problem because it provides an identification method which does not require direct, especially, visual approach to the object, but is a remote system. A further advantage is that the electronic marker unit (because it is buried below ground) is less susceptible to damage, deliberate or inadvertent removal, especially since the electronic marker unit can be buried at some depth in the ground yet reading of the information is still possible. Furthermore, fixing of the electronic marker unit to the ground anchored object is not necessary which is advantageous because the object will not thereby be damaged by bolts, nails or other fixing devices

Generally this method is applicable to any ground-anchored object where at least a portion of the object is above ground when tagged with the electronic marker units (and above ground means where at least a portion of the ground anchored object is above ground).

The method is also useful where due to circumstance (e.g. vandalism, deliberate or inadvertent removal) part of the above ground portion of the ground anchored object has been removed subsequent to tagging with the electronic marker unit. The method may be used both to locate (e.g. where above ground parts have been removed or plant growth obscures) and/or identify the ground anchored object.

Usually, the ground-anchored object is selected from a tree, a road intersection (i.e. a part of the road system where identification would be useful), pavement marking (especially permanent pavement marking) or an object of road furniture. The road furniture may generally be selected from a bench, a traffic barrier, a bollard, a post box, a streetlamp, a traffic light, or a traffic sign. Road intersections and pavement markings are ground anchored and have above ground portions.

In the usual case where the ground anchored object is visible, the method may further comprise a step, before using the remote reader to interrogate a below-ground volume, of locating an above-ground, ground-anchored object.

Generally, using the remote reader to interrogate the below-ground volume comprises using the remote reader at a predetermined object distance from the ground-anchored object to interrogate a below-ground volume. The object distance would generally be determined (and may have been recorded e.g. in an inventory database and/or the software of the remote reader) taking account of the nature of the object and proximity of other objects (that may or may not be tagged). Usually, the predetermined object distance will be in the range of 0.5 m to 5 m, preferably 1 m to 3 m.

Generally, using the remote reader to interrogate the below-ground volume comprises using the remote reader at a predetermined bearing from the ground-anchored object to interrogate a below-ground volume. The bearing may be a compass bearing from the object or determined with reference to landmarks (e.g. other ground anchored objects of the same or different kind) or other electronic marker units which have been used to tag the ground anchored object (if more than one is used). The bearing would usually be recorded in an inventory database and/or the software of the reader.

Usually, the remote reader will be a hand-held remote reader. In other circumstances however, the remote reader may be a vehicle mounted remote reader.

Generally, the at least one electronic marker unit will be at a predetermined depth below-ground and at a predetermined marker distance from the ground-anchored object.

The predetermined depth may be in the range of 0.1 m to the maximum reading depth of the remote reader, preferably is in the range of 0.1 m to 2 m, and more preferably in the range 0.1 m to 1.5 m.

The predetermined marker distance would generally be determined (and may have been recorded e.g. in an inventory database and/or the software of the remote reader) taking account of the nature of the ground, the nature of the ground anchored object and proximity of other objects (that may or may not be tagged). Usually, the marker distance would be in the range 0.1 m to 3 m, preferably 0.1 m to 2 m and more preferably 0.1 m to 1 m.

Preferably, the electronic marker unit comprises a radio frequency transponder. Particularly suitable transponders are radio frequency identity (RFID) transponders or tags. The frequency of operation of the transponder will generally be UHF (e.g. between 300 MHz and 3,000 MHz) although other frequency ranges may be used. Preferably, the transponder will be a passive transponder.

Usually, the electronic marker unit comprises a protective housing. Particularly suitable protective housings comprise a polymer, most preferably acrylonitrile butadiene styrene (ABS).

The method will usually involve using the electronic marker data to determine the identity and/or location of the ground-anchored object by searching a database (e.g. an inventory database) of ground-anchored objects using the electronic marker data.

In most embodiments, the ground-anchored object will be tagged with two or more electronic marker units (e.g. 2, 3, 4, 5 or 6 electronic marker units)

The method may involve providing and using two or more remote readers sequentially (i.e. one after the other) and/or simultaneously (i.e. two or more at the same time).

In a second aspect of the present invention, there is provided apparatus for tagging and identifying an above ground, ground-anchored object, the apparatus comprising, at least one electronic marker unit, the electronic marker unit being buried in the ground at a predetermined depth and at a predetermined marker distance from the ground-anchored object, and at least one remote reader adapted to obtain electronic marker data from the at least one electronic marker unit by interrogating a below-ground volume in the vicinity of the at least one remote reader.

In a third aspect of the present invention, there is provided a method of tagging an above-ground, ground-anchored object with an electronic marker unit, the method comprising locating and/or identifying the ground-anchored object to be tagged, providing at least one electronic marker unit, and burying the at least one electronic marker unit in the ground at a predetermined depth and at a predetermined marker distance from the ground-anchored object and, optionally at a predetermined bearing from the ground-anchored object.

So that the present invention may be more completely understood, reference is made to the accompanying drawings in which:
Figure 1a illustrates schematically apparatus being used in the method to identify a tree.
Figure 1b is a top view of the apparatus of Figure 1a.
Figure 2a illustrates schematically apparatus being used in the method to identify a road intersection.
Figure 2b illustrates a top view of the apparatus of Figure 2a.
Figure 3a illustrates schematically apparatus being used in the method to identify a road sign.
Figure 3b illustrates a top view of the apparatus of Figure 3a.

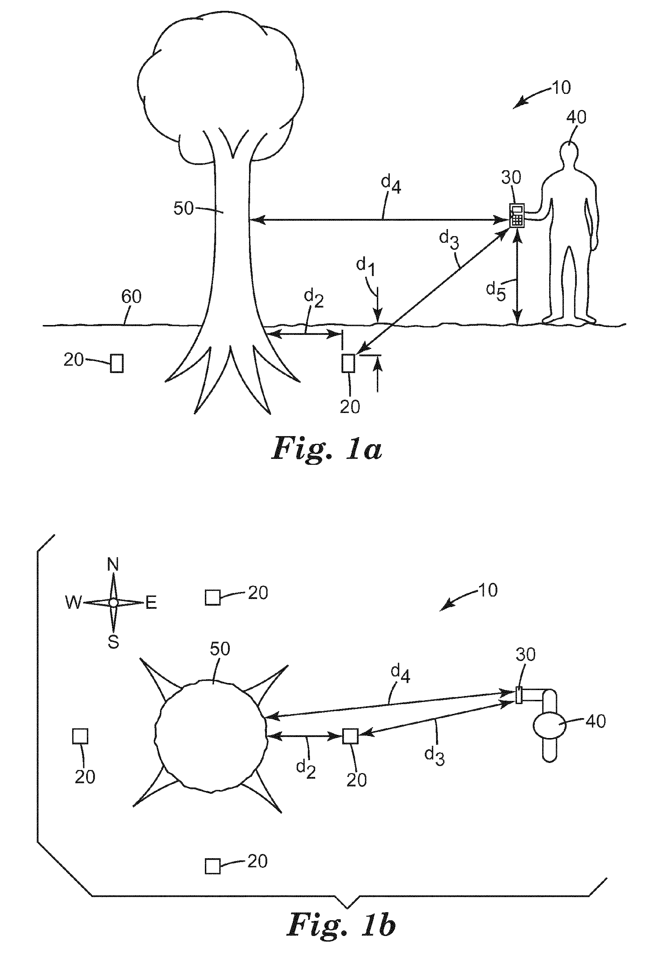

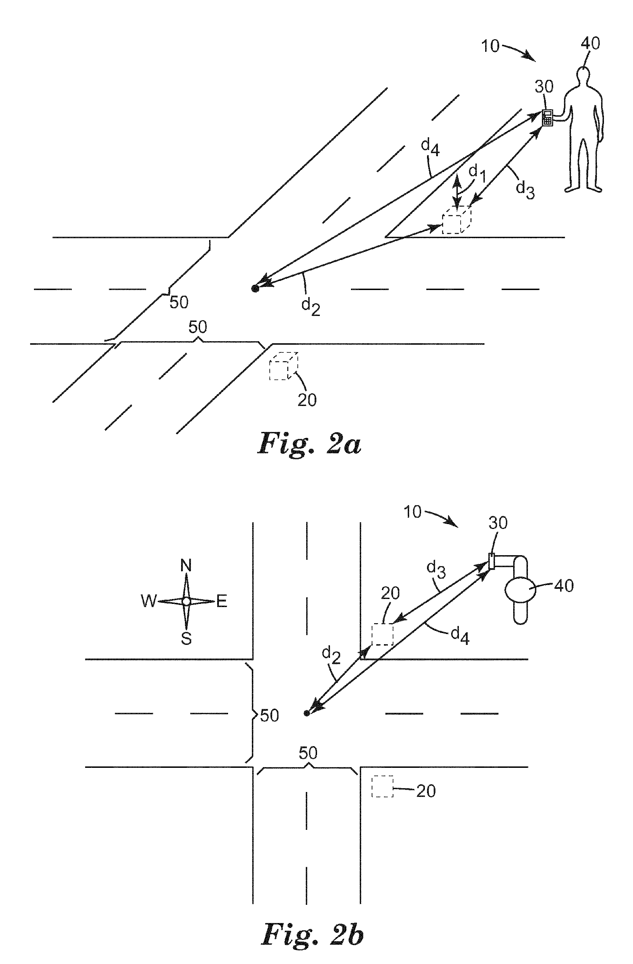

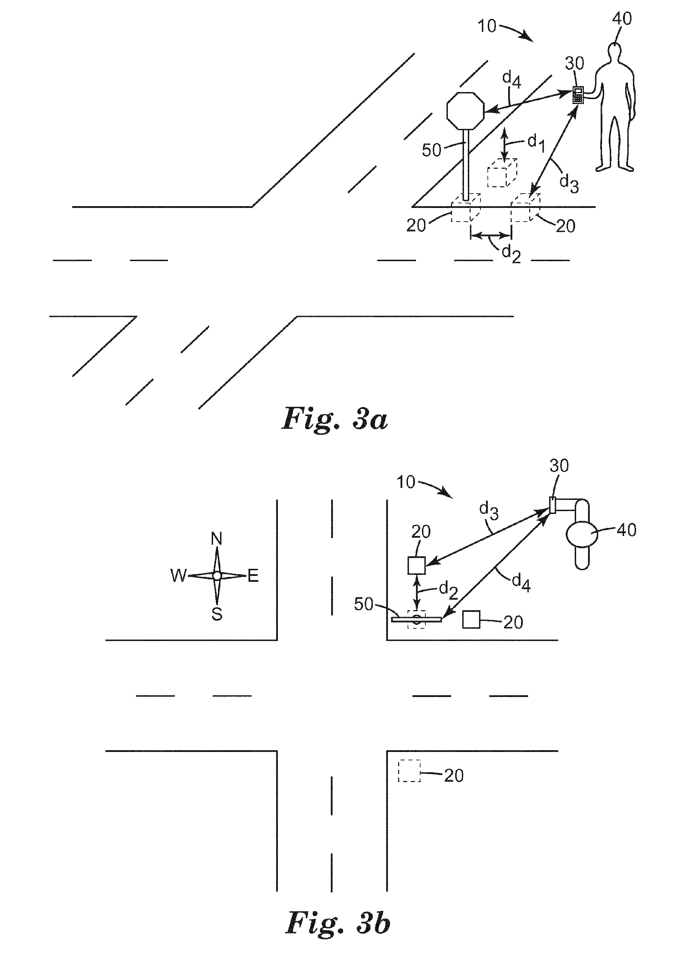

The reference numerals refer to:
10 apparatus,
20 electronic marker,
30 remote reader,
40 operator,
50 object (tree in Fig 1a and 1b, road intersection in Fig 2a and 2b and road sign in Fig 3a and 3b),
60 ground level.

Fig 1a and 1b show apparatus 10 being used in a method to identify a tree 50 which is ground anchored with a large portion of the tree 50 being above ground. The apparatus 10 comprises four electronic marker units 20 buried at a depth of d₁ (12 cm) below ground level 60 and in the case of electronic marker unit 20 closest to the operator 40, at a marker distance d₂ from the tree 50 trunk. The other electronic marker units 20 are at at the same (within measurement error which may be large with an irregular tree 50) marker distance d₂. The four electronic marker units 20 are at compass bearings from the tree 50, at north, south, west and east (as shown in Fig 1b). The electronic marker units 20 contain a passive UHF RFID transponder with a unique ID.

In the method to identify the tree 50 (e.g. by relating the tree 50 to records in an inventory database), the operator 40 operates the radio frequency remote reader 30 to interrogate a below ground volume at an object distance d₄ from the tree 50. The remote reader 30 obtains marker data from at least the RFID in the nearest electronic marker unit 20. Which of the electronic marker units 20 responded with data can be determined by the remote reader 30 from distance d₃ between the remote reader 30 and electronic marker unit 20 (itself determined using detected signal level) and the height d₅ of the remote reader 30 above ground 60. The inventory database (not shown) contains information on the tree 50 and bearing, d₁, d₂ and ID of the RFIDs in the electronic marker units 20. Together with the returned marker data and d₄, d₃ and, optionally, d₅ it is possible to uniquely identify the tree 50 and relate it to other data in the database.

As an alternative to compass bearing, the bearing of the ground anchored object 50 from each of the electronic marker units 20 may be determined by the relative position of two or more of the electronic marker units 20 to the ground anchored object 50.

Figure 2a and 2b illustrate apparatus for use in a similar method to identify a road intersection 50. Generally the same method is used as in Figure 1a, b with the same result (the same reference numerals refer to the same feature with the exception of road intersection 50). In the case of Fig 2a and 2b, there are two electronic marker units 20 situated on a bearing NE and SE of the centre of the road intersection 50. Generally the same procedure as for the tree method may be adopted with the same result of uniquely identifying the road intersection 50.

Figure 3a and 3b illustrate apparatus for use in a similar method to identify a road sign 50. Generally the same method is used as in Figures 1a, b and 2a, b with the same result (the same reference numerals refer to the same feature with the exception of road sign 50). In the case of Fig 3a and 3b, there are three electronic marker units 20, two situated at a marker distance d₂ on a bearing N and E of the road sign 50 and one S of the road sign 50 at a greater marker distance than for the other electronic marker units 20. Generally the same procedure as for the tree or road intersection method may be adopted with the same result of uniquely identifying the road sign.

## Claims

1. A method of identifying an above-ground, ground-anchored object, the ground-anchored object being tagged with at least one below-ground electronic marker unit, the method comprising
providing a remote reader,
using the remote reader to interrogate a below-ground volume, thereby obtaining electronic marker data from one or more electronic marker units in the below-ground volume, and
using the electronic marker data to determine the identity and/or location of the ground-anchored object.

2. A method as claimed in claim 1, wherein the ground-anchored object is selected from a tree, a road intersection, or an object of road furniture.

3. A method as claimed in claim 2, wherein the road furniture is selected from a bench, a traffic barrier, a bollard, a post box, a streetlamp, a traffic light, or a traffic sign.

4. A method as claimed in any one of the preceding claims, further comprising a step, before using the remote reader to interrogate a below-ground volume, of locating an above-ground, ground-anchored object.

5. A method as claimed in claim 4, wherein using the remote reader to interrogate the below-ground volume comprises using the remote reader at a predetermined object distance from the ground-anchored object to interrogate a below-ground volume.

6. A method as claimed in either claim 4 or claim 5, wherein using the remote reader to interrogate the below-ground volume comprises using the remote reader at a predetermined bearing from the ground-anchored object to interrogate a below-ground volume.

7. A method as claimed in any one of the preceding claims, wherein the at least one electronic marker unit is at a predetermined depth below-ground and at a predetermined marker distance from the ground-anchored object.

8. A method as claimed in claim 7, wherein the predetermined depth is in the range of 0.1 m to the maximum reading depth of the remote reader, preferably is in the range of 0.1 m to 2 m, and more preferably in the range 0.1 m to 1.5 m.

9. A method as claimed in any one of the preceding claims, wherein the electronic marker unit comprises a radio frequency passive transponder.

10. A method as claimed in any one of the preceding claims, wherein the electronic marker unit comprises a protective housing.

11. A method as claimed in claim 10, wherein the protective housing comprises a polymer, preferably acrylonitrile butadiene styrene.

12. A method as claimed in any one of the preceding claims, wherein using the electronic marker data to determine the identity and/or location of the ground-anchored object comprises searching a database of ground-anchored objects using the electronic marker data.

13. A method as claimed in any one of the preceding claims, wherein the ground-anchored object is tagged with two or more electronic marker units.

14. Apparatus for tagging and identifying an above ground, ground-anchored object, the apparatus comprising,
at least one electronic marker unit, the electronic marker unit being buried in the ground at a predetermined depth and at a predetermined marker distance from the ground-anchored object, and
at least one remote reader adapted to obtain electronic marker data from the at least one electronic marker unit by interrogating a below-ground.

15. A method of tagging an above-ground, ground-anchored object with an electronic marker unit, the method comprising
locating and/or identifying the ground-anchored object to be tagged,
providing at least one electronic marker unit, and
burying the at least one electronic marker unit in the ground at a predetermined depth and at a predetermined marker distance from the ground-anchored object and, optionally, at a predetermined bearing from the ground-anchored object.
